Europäisches Patentamt

European Patent Office

Office européen des brevets

(19)

(11) Publication number: **0 080 205**
**A2**

# EUROPEAN PATENT APPLICATION

(21) Application number: 82110791.9

(51) Int. Cl.³: **G 11 B 5/70**

(22) Date of filing: 23.11.82

(30) Priority: 24.11.81 JP 188716/81
24.11.81 JP 188717/81

(43) Date of publication of application: 01.06.83
Bulletin 83/22

(84) Designated Contracting States: **DE FR GB**

(71) Applicant: **Hitachi Maxell Ltd., No 1-1-88, Ushitora Ibaraki-shi, Osaka-fu (JP)**

(72) Inventor: **Miyata, Kazushi Hitachi Maxell Shataku A-3-1, No 1., Koizumi Oyamazaki-cho, Otokuni-gun Kyoto-fu (JP)**
Inventor: **Hidaka, Toshiro, No 1-10, Hoshigaoka 1-chome, Hirakata-shi Osaka-fu (JP)**
Inventor: **Watatani, Seiji, No 4-5, Zushi-cho, 2-chome, Takatsuki-shi Osaka-fu (JP)**
Inventor: **Matsuura, Takeshi, S-405, No. 8-1, Toriimae Anmyoji Oyamazaki-cho, Otokuni-gun Kyoto-fu (JP)**

(74) Representative: **von Kreisler, Alek, Dipl.-Chem. et al, Deichmannhaus am Hauptbahnhof, D-5000 Köln 1 (DE)**

(54) Magnetic recording medium.

(57) A magnetic recording medium such as a magnetic tape, which comprises a base carrier and a magnetic layer formed on the base carrier, which is characterized in that the binder for forming the magnetic layer on the base carrier comprises a combination of at least one of resins selected from the group consisting of a vinyl chloridevinyl acetate copolymer resin, a polyvinylidene chloride resins, a phenoxy resin, an acrylic resin and a fibrillar resin, and a polyurethane resin containing 15% by weight or more of 4,4′-diphenylmethane diisocyanate, and optionally an isocyanate compound having a low molecular weight, said magnetic recording medium having excellent mechanical strength, excellent electrical characteristics and durability and being used without undesirable buckle, injury, curl of edge thereof during usage even in a thin thickness.

MAGNETIC RECORDING MEDIUM

The present invention relates to a magnetic recording medium such as a magnetic tape, more particularly a magnetic recording medium having excellent mechanical strength and further excellent electrical characteristics and durability.

Recently, it has been tried to make the thickness of a magnetic tape, particularly a magnetic tape for video tape recorder, as thin as possible in order to make the time of recording and reproduction of the tape as long as possible when it is put in a cartridge. However, when the thickness of a magnetic tape is made thin, it results in less mechanical strength thereof, and thereby, the magnetic tape occasionally buckles or is injured by contacting the edge of the tape with a guide for controlling running of the tape or an edge of a loading post for controlling a magnetic tape in case of recording, reproduction, fast feeding, turning back, loading or unloading, and further, it is easily curled or wrinkled.

From this viewpoint, it has been proposed to improve the machanical strength of a magnetic tape by using as a base film a reinforced film obtained by drawing in longitudinal or width direction a plastic film such as polyester film when prepared. However, such a device is not yet satisfactory and can not sufficiently prevent the undesirable buckle, injury or curl of the edge of the tape.

The magnetic layer of the magnetic recording medium is usually formed by coating a magnetic composition comprising magnetic particles, binders, organic solvents and other additives on a base film and drying. Aiming at the effect of the binder on the properties of magnetic recording medium, the present inventors have extensively studied various components of binders. As a result, it has been found that when a combination of at least one of the resins selected from vinyl chloride-vinyl acetate copolymer resins, polyvinylidene chloride resins, phenoxy resins, acrylic resins and fibrillar resins and a polyurethane resin containing 15 % by weight or more of 4,4'-diphenylmethane diisocyanate is used as a component of the binders for the magnetic layer, the elastic modulus of the magnetic layer is more improved and the magnetic tape has more improved mechanical strength, and thereby, even if the thickness of the magnetic tape is made thin, undesirable buckle, injury or curl of the edge of the tape can effectively be prevented, and further, the dispersibility and abrasion resistance of the magnetic particles are also improved and thereby the magnetic recording medium shows improved surface smoothness of the magnetic layer and excellent electrical characteristics and durability.

An object of the present invention is to provide an improved magnetic recording medium such as a magnetic tape which has excellent mechanical strength, excellent electrical characteristics and durability. Another object of the invention is to provide a magnetic recording medium which can be used without undesirable buckle, injury or curl of the edge during the usage even in a thin thickness. These and other objects and advantages of the present invention will be apparent to persons skilled in the art from the following description.

The magnetic recording medium of the present invention comprises a base carrier and a magnetic layer formed on the base carrier, which is characterized in that the binder for forming the magnetic layer on the base carrier comprises a combination of at least one of resins selected from the group consisting of a vinyl chloride-vinyl acetate copolymer resin, a polyvinylidene chloride resin, a phenoxy resin, an acrylic resin and a fibrillar resin, and a polyurethane resin containing 15 % by weight or more of 4,4'-diphenylmethane diisocyanate.

The magnetic layer of the magnetic recording medium of the present invention is formed by using a magnetic composition comprising conventional components other than binders, such as magnetic particles, organic solvents and other additives.

The polyurethane resin used as one component of the specific binder in the present invention contains 15 % by weight or more, preferably 15 to 30 % by weight, of 4,4'-diphenylmethane diisocyanate as the isocyanate component. Said polyurethane resin is usually prepared by firstly preparing a polyester from a dibasic acid (e.g. adipic acid) and a diol (e.g. 1,4-butanediol, 1,6-hexanediol) by a conventional method and then reacting the polyester with 4,4'-diphenylmethane diisocyanate.

The polyurethane resin contains as an isocyanate component 15 % by weight of a straight chain 4,4'-diphenylmethane diisocyanate wherein two benzene rings are straightly bonded via methylene group and both benzene rings are substituted by an isocyanate group at para-position thereof, and hence, the elastic modulus of the formed magnetic layer is more improved by the action of benzene rings bonded straightly with isocyanate group, and owing to the magnetic layer having excellent strength, there can be obtained a magnetic recording medium having excellent mechanical strength. A conventional polyurethane resin may contain 4,4'-diphenylmethane diisocyanate as the isocyanate component but the content thereof is lower than 15 % by weight, and hence the action of the benzene rings bonded straightly is week, and hence, the improvement of elastic modulus of the magnetic layer is insufficient and further the mechanical strength of the magnetic tape is not sufficiently improved either.

The resins used as another component of binder, such as vinyl chloride-vinyl acetate copolymer resins, polyvinylidene chloride resins, phenoxy resins, acrylic resins and fibrillar resins, have all excellent compatibility with the magnetic particles, and further have excellent coating properties and are effective on the excellent dispersibility of the magnetic particles, improvement of electircal characteristics of the magnetic tape and improvement of abrasion resistance of the magnetic tape because of forming a hard magnetic layer. Moreover, since the resins contain a hydroxy group or a carboxyl group within the molecule, the hydroxy or carboxyl group reacts with an isocyanate group contained in a low molecular weight isocyanate compound (if it is incorporated as mentioned hereinafter) to form a crosslinked bond, which is effective on more improvement of the strength of the magnetic layer and on more improvement of the abrasion resistance thereof.

Suitable examples of the vinyl chloride-vinyl acetate copolymer resins are vinyl chloride-vinyl acetate-vinyl alcohol copolymers, vinyl chloride-vinyl acetate copolymers, vinyl chloride-vinyl acetate-maleic acid copolymers, or the like, including commercially available products such as VAGH, VYHH and VMCH (manufactured by U.C.C., U.S.A.), Esreck A, Esreck C and Esreck M (manufactured by Sekisui Kagaku K.K., Japan), DENKAVINYL (manufactured by Denki Kagaku Kogyo K.K., Japan). Suitable examples of the polyvinyldene chloride resins are polyvinilidene chlorides, vinylidene chloride-acrylonitrile copolymers, vinyl chloride-vinylidene chloride copolymers, or the like, including commercially available products such as Diophan 207 D-C (manufactured by BASF, West Germany), Sarane F-216, F-120, F-220, F-300, F-310 (manufactured by Asahi Dow Co., Japan), Denka 1000WK (manufactured by Denki Kagaku Kogyo K.K., Japan), Arone 321 (manufactured by Toa Gosei Kagaku, Japan). Suitable examples of the phenoxy resins are commercially available PKHH, PKHC, PKHA (manufactured by U.C.C., U.S.A.). Suitable examples of the acrylic resins are polyacrylic esters, polymethacrylic esters, polyacrylonitriles, polyacrylamides, or the like, including commercially available products such as Acrynal 1000 (manufactured by Toei Kasei, Japan). Suitable examples of the fibrillar resins is nitrocellulose and includes commercially available products such as Nitrocellulose L1/4, L1/2, L1, H1/4,

H1/2, H1 and H5 (manufactured by Asahi Kasei, Japan), Nitrocellulose RS1/16, RS1/2, RS1 and RS2 (manufactured by Daicel Chemical, Japan).

The polyurethane resins containing 15 % by weight or more of 4,4'-diphenylmethane diisocyanate and the resins such as vinyl chloride-vinyl acetate copolymer resins, polyvinylidene chloride resins, phenoxy resins, acrylic resins and fibrillar resins are preferably used in a ratio of 90 : 10 to 10 : 90 by weight, more preferably 70 : 30 to 40 : 60 by weight. When the amount of the polyurethane resins is smaller than the above range, the elastic modulus of magnetic layer is insufficiently improved, and on the other hand, when the amount of the polyurethane resins is larger than the above range, the dispersibility of magnetic particles is deteriorated.

In addition to the above binder components, a low molecular weight isocyanate compound may be used as a binder component. The isocyanate compound is preferably trifunctional isocyanate compounds having a molecular weight of 200 to 3,000, which is prepared by reacting 1 mole of a triol and 3 moles of diisocyanate. When the isocyanate compound is used, the isocyanate group contained therein reacts with the hydroxy or carboxyl group contained in the vinyl chloride-vinyl acetate copolymer resins, phenoxy resins, acrylic resins or fibrillar resins to form a crosslinked bond, and thereby, the strength and abrasion resistance of the magnetic layer are more improved.

Suitable examples of the isocyanate compound having a low molecular weight are 2,4-tolylene diisocyanate, m-phenylene diisocyanate, 4,4'-diphenylmethane diisocyanate, 1,4-cyclohexylene diisocyanate, 1,5-tetrahydronaphthalene diisocyanate, 1,6-hexamethylene diisocyanate, 4-chloro-1,3-phenylene diisocyanate, 1,5-naphthalene diisocyanate, or the like, and include commercially available products such as Colonate L, Colonate HL, Colonate 2036, Colonate 2014, Colonate 3015 and Colonate 3030 (manuafactured by Nippon Polyurethane Kogyo K.K., Japan), Desmodule L, Desmodule 15, Desmodule E14, Sumidule L, Sumidule IL, Sumidule T80, Sumidule 44V-20 and Sumidule PF (manufactured by Sumitomo Bayer Urethane Co., Japan), Takenate D102, Takenate D103, Takenate D103H, Takenate D204, Takenate D110N, Takenate D120N, Takenate M402 and Takenate M408 (manufactured by Takeda Chemical, Japan), Crisbone NX, Crisbone CL-2 and Barnock DN-950 (manufactured by Dainippon Ink Kagaku Kogyo K.K., Japan).

The isocyanate compound having a low molecular weight may preferably be used in an amount of 0.1 to 30 % by weight based on the total weight of the binder components. When the amount of the isocyanate compound is lower than the above range, it is less effective on the formation of crosslinked bond, and hence, the magnetic layer shows lower strength and less abrasion resistance, and on the other hand, when the amount is larger than the above range, the crosslink dnesity becomes too higher which may causes too hard magnetic layer and hence make the magnetic layer brittle.

Among the other components of the magnetic composition, the magnetic particles include all conventional various magnetic particles, for example, $\gamma$-$Fe_2O_3$ particles, $Fe_3O_4$ particles, Co-containing $\gamma$-$Fe_2O_3$ particles, Co-containing $Fe_3O_4$ particles, $CrO_2$ particles, and metallic magnetic particles (e.g. Fe particles, Co particles, Fe-Ni particles).

The organic solvents include ketone solvents (e.g. cyclohexanone, methyl ethyl ketone, methyl isobutyl ketone), ester solvents (e.g. ethyl acetate, butyl acetate), aromatic hydrocarbon solvents (e.g. benzene, toluene, xylene), acid amide solvents (e.g. dimethylformamide), ether solvents (e.g. tetrahydrofuran, dioxane) which are suitable for dissolving the binder components. These solvents may be used alone or in combination of two or more thereof.

The magnetic composition may also be incorporated by other conventional additives such as dispersing agents, lubricating agents, abrasives, electrostatic agents, or the like.

The magnetic recording medium of the present invention can be prepared by a conventional method, for example, by adding at least one of the resins selected from vinyl chloride-vinyl acetate copolymer resins, polyvinylidene chloride resins, phenoxy resins, acrylic resins and fibrillar resins to a polyurethane diisocyanate and optionally adding thereto an isocyanate compound having a low meolecular weight and adding other components such as magnetic particles, organic solvents and other additions to the mixture, and coating the resulting magnetic composition to a base carrier such as a polyester film by a conventional method such as sparay coating or roll coating, followed by drying.

The present invention is illustrated by the following Examples but should not be construed to be limited thereto.

### Example 1

A magnetic composition is prepared in the following formulation.

| | |
|---|---|
| Co-containing $\gamma$-Fe$_2$O$_3$ magnetic particles | 100 parts by weight |
| Granular $\alpha$-Fe$_2$O$_3$ particles | 4 " |
| Carbon black | 4. " |
| Zinc stearate | 0.5 " |
| Polyurethane resin (content of 4,4'-diphenylmethane diisocyante: 20 % by weight) | 10 " |

| | |
|---|---|
| VAGH (vinyl chloride-vinyl acetate-vinyl alcohol copolymer, manufactured by U.C.C., U.S.A.) | 15 parts by weight |
| n-Butyl stearate · | 1 " |
| Myristic acid | 0.5 " |
| Cyclohexanone | 95 " |
| Toluene | 95 " |

The above components are mixed and dispersed in a ball mill for 72 hours to prepare a magnetic composition. The magnetic composition is coated on a polyester film in a thickness of 10 $\mu$ and dried to a thickness of 5 $\mu$. After subjecting to a surface treatment, the resulting film is cut in a prescibred width to give a magnetic tape.

Example 2

A magnetic tape is prepared in the same manner as described in Example 1 except that the magnetic composition is further incorporated with Colonate L (a low molecular weight isocyanate compound, manufactured by Nippon Polyurethane Kogyo, Japan; 5 parts by weight).

Example 3

A magnetic tape is prepared in the same manner as described in Example 1 except that VAGH in the magnetic composition is replaced by the same amount of Sarane F-216 (a vinylidene chloride-acrylonitrile copolymer, manufactured by Asahi Dow Co., Japan).

### Example 4

A magnetic tape is prepared in the same manner as described in Example 1 except that VAGH in the magnetic composition is replaced by the same amount of PKHH (phenoxy resin, manufactured by U.C.C., U.S.A.).

### Example 5

A magnetic tape is prepared in the same manner as described in Example 1 except that VAGH in the magnetic composition is replaced by the same amount of Acrynal 1000 (a polymethacrylic ester, manufactured by Toei Kasei, Japan).

### Reference Examples 1 to 5

Various magnetic tapes are prepared in the same manner as described in Examples 1 to 5 except that the same amount of a polyurethane resin containing 13 % by weight of 4,4'-diphenylmethane diisocyanate is used instead of the polyurethane resin and the binder components other than polyurethane resin as shown in Table 1 are used.

Table 1

| | Binder component other than polyurethane resin |
|---|---|
| Ref. Ex. 1 | VAGH |
| " 2 | VAGH + Colonate L |
| " 3 | Sarane F-216 |
| " 4 | PKHH |
| " 5 | Acrynal 1000 |

Example 6

A magnetic tape is prepared in the same manner as described in Example 1 except that VAGH in the magnetic composition is replaced by the same amount of Nitrocellulose Hl (a nitrocellulose, manufactured by Asahi Kasei, Japan) and zinc stearate is excluded.

Example 7

A magnetic tape is prepared in the same manner as described in Example 1 except that the polyurethane resin in the magnetic composition is replaced by the same amount of a polyurethane resin containing 17 % by weight of 4,4'-diphenylmethane diisocyanate and zinc stearate is excluded.

Example 8

A magnetic tape is prepared in the same manner as described in Example 1 except that Colonate L (a trifunctional, low molecular weight isocyante compound, manufactured by Nippon Polyurethane Kogyo K.K.,

Japan; 5 parts by weight) is additionally contained in the magnetic composition and zinc stearate is excluded.

### Example 9

A magnetic tape is prepared in the same manner as described in Example 7 except that Colonate L (a trifunctional, low molecular weight isocyanate compound, manufactured by Nippon Polyurethane Kogyo, K.K., Japan; 5 parts by weight) is additionally contained in the magnetic composition.

### Reference Example 6

A magnetic tape is prepared in the same manner as described in Example 6 except that the same amount of a polyurethane is used instead of the polyurethane resin.

### Reference Example 7

A magnetic tape is prepared in the same manner as described in Example 6 except that Nitrocellulose H1 is excluded and the amount of the polyurethane resin (the content of 4,4'-diphenylmethane diisocyanate: 20 % by weight) is changed from 10 parts by weight to 25 parts by weight.

As to the magnetic tapes obtained in the above Examples and Reference Examples, the elastic modulus at 1 % elongation of the magnetic layer was measured and further, the mechanical strength of the tape was measured as follows.

Each magnetic tape was wound in a cassette for a video tape recorder in VHS system in a length of 345 m and said cassette was put within a video tape recorder in VHS system. The tape was travelled about 300 m and then stopped. At this stage, the tape was repeatedly (10 times) subjected to loading and unloading against a revolving cylinder head, and then there was observed the degree of injury of the edge of tape due to contact with a guide for tape-travelling. Besides, audio output of each magnetic tape was measured by using the same video deck as used above, and each data are shown by the difference from the value of the tape obtained in Example 1 (i.e. the audio output of tape obtained in Example 1 is taken as zero "0").

The results are shown in Table 2.

0080205

Table 2

| | Elastic modulus of magnetic layer $(kg/mm^2)$ | | Degree of injury of the edge of tape | Audio output (dB) |
|---|---|---|---|---|
| | Longitudinal direction | Width direction | | |
| Ex. 1 | 540 | 190 | No injury was observed | 0 |
| " 2 | 550 | 195 | " | +0.5 |
| " 3 | 510 | 185 | " | -1 |
| " 4 | 505 | 180 | " | -1 |
| " 5 | 500 | 175 | " | -1 |
| " 6 | 640 | 280 | " | 0 |
| " 7 | 580 | 190 | " | -1 |
| " 8 | 670 | 300 | " | 0 |
| " 9 | 570 | 195 | " | -1 |
| Ref. Ex. 1 | 380 | 135 | Edge was injured | -20 |
| " 2 | 390 | 145 | " | -16 |
| " 3 | 375 | 135 | " | -20 |
| " 4 | 375 | 135 | " | -20 |
| " 5 | 370 | 130 | " | -20 |
| " 6 | 350 | 140 | " | -20 |
| " 7 | 510 | 185 | No injury was observed | -6 |

As is clear from the above table, a conventional magnetic tape as in Reference Example 1 showed lower elastic modulus of the magnetic layer, injury of edge thereof and also extremely lower audio output, and on the other hand, the magnetic tapes of the present invention (Examples 1 to 9) showed all much higher elastic modulus in comparison with the magnetic tapes obtained in Reference Examples 1 to 7 and showed no injury of edge, while all magnetic tapes obtained in Reference Examples 1 to 6 showed injury of edge and extremely lower audio output. These results mean that the magnetic recording medium of the present invention has more improved mechanical strength.

0080205

What is claimed is:

1. A magnetic recording medium comprising a base carrier and a magnetic layer formed on the base carrier, which is characterized in that the binder for forming the magnetic layer on the base carrier comprises a combination of at least one of resins selected from the group consisting of a vinyl chloride-vinyl acetate copolymer resin, a polyvinylidene chloride resin, a phenoxy resin, an acrylic resin and a fibrillar resin, and a polyurethane resin containing 15 % by weight or more of 4,4'-diphenylmethane diisocyanate.

2. A magnetic recording medium according to claim 1, wherein the resin selected from a vinyl chloride-vinyl acetate copolymer resin, a polyvinylidene chloride resin, a phenoxy resin, an acrylic resin and a fibrillar resin and the polyurethane resin are used in a ratio of 90 : 10 to 10 : 90 by weight.

3. A magnetic recording medium according to claim 1, wherein the resin is a fibrillar resin.

4. A magnetic recording medium according to claim 1, wherein an isocyanate compound having a low molecular weight is additionally used as the binder component.

5. A magnetic recording medium according to claim 4, wherein the isocyanate compound is used in an amount of 0.1 to 30 % by weight based on the total weight of the binder components.